# EUROPÄISCHE PATENTSCHRIFT

(11) **EP 0 362 856 B1**
(45) Veröffentlichungstag und Bekanntmachung des Hinweises auf die Patenterteilung: **31.03.1993**
(21) Anmeldenummer: 89118525.8
(22) Anmeldetag: 05.10.1989
(51) Int. Cl.: E02D 31/00, E02D 3/115, E02D 19/14

(54) **Verfahren und Vorrichtung zur Sanierung kontaminierter Böden**
Process and apparatus for purifiying polluted soils
Procédé et dispositif pour assainir les terrains contaminés

(30) Priorität: 05.10.1988 DE 3833796
(43) Veröffentlichungstag der Anmeldung: 11.04.1990
(73) Patentinhaber: Linde Aktiengesellschaft, 65189 Wiesbaden (DE)
(72) Erfinder: Rebhan, Dieter, Ing. grad., D-8192 Geretsried-Gelting (DE)
(74) Vertreter: Schaefer, Gerhard, Dr.

(56) Entgegenhaltungen:
- EP-A- 0 278 557
- DE-A- 3 142 264
- DE-A- 3 618 387

## Beschreibung

Die Erfindung betrifft ein Verfahren zur Sanierung von mit Schadstoffen verunreinigtem Boden durch Gefrieren und anschließendes Ausheben des verunreinigten Bodens sowie eine Vorrichtung zur Durchführung des Verfahrens.

Es ist hinreichend bekannt, daß mit Schadstoffen stark kontaminierte Böden auf Fabrikgeländen, Mülldeponien usw., eine große Gefahr für die Umwelt darstellen. Beispielsweise können Schadstoffe in das Grundwasser gelangen und so die Trinkwasserversorgung großer Bevölkerungsteile gefährden. Insbesondere die Sanierung von Sondermülldeponien deren Böden teilweise extrem hohe Schadstoffkonzentrationen aufweisen, ist schwierig und gefährlich, auch wenn es sich nur um partielle Sanierungsmaßnahmen handelt. Eine bekannte Methode, die toxischen und zum Teil leicht flüchtigen Schadstoffe sicher zu entfernen ist das sogenannte Vereisungsverfahren. Hierbei werden die kontaminierten Bodenbereiche gefroren und die im gefrorenen Bodenmaterial enthaltenen Schadstoffe dabei insitu gefrostet, sodaß die leicht flüchtigen Schadstoffe nicht entweichen können. Anschließend wird das gefrorene kontaminierte Bodenmaterial ausgehoben, in Behälter eingebracht und dicht verschlossen.

Zum Gefrieren des Bodens werden bisher ausschließlich Gefrierrohrsysteme verwendet (siehe z.B. DE-A-3618387). Dabei werden Gefrierrohre in den Boden gerammt und es wird ein Kältemittel meist flüssiger Stickstoff, in die Gefrierrohre eingeleitet. Üblicherweise werden Bohrungen im Boden angebracht und die Gefrierrohre in die Bohrlöcher hineingeschoben. Die herkömmliche Methode hat den Nachteil, daß sich durch das Anbohren des Bodens bzw. Einrammen der Gefrierrohre die kontaminierten Bodenbereiche vermischen, z.B. Giftfässer angebohrt werden und flüchtige Schadstoffe über die Bohrlöcher ausgasen. Außerdem sind Bohrungen auf weichem, kontaminiertem Gelände teuer und gefährlich. Ein weiterer Nachteil besteht darin, daß beim Einsatz von Gefrierrohren der kälteste Bodenbereich unten liegt. Um ein Entweichen flüchtiger Substanzen zu verhindern, sind tiefe Temperaturen im Boden jedoch dort erwünscht, wo gerade abgebaut wird. Ferner können während des Abbaus zerstörte Gefrierrohre nur unter großen Schwierigkeiten wieder in Betrieb genommen werden. Darüberhinaus ist eine aufwendige Versorgungsinstallation für die Zufuhr des flüssigen Stickstoffs notwendig.

Der vorliegenden Erfindung liegt daher die Aufgabe zugrunde, ein Verfahren der eingangs genannten Art sowie eine Vorrichtung zur Durchführung des Verfahrens so auszugestalten, daß auf wirtschaftliche und sichere Weise eine Sanierung des Bodens erreicht wird, ohne daß die genannten Nachteile auftreten.

Diese Aufgabe wird erfindungsgemäß dadurch gelöst, daß zum Gefrieren des Bodens mindestens ein flächenhaft ausgebildeter Gefrierkasten auf den auszuhebenden Boden aufgesetzt wird und in den Gefrierkasten ein Kältemittel eingeleitet wird. Auf diese Weise wird der unter dem Gefrierkasten liegende Boden vereist.

Bevorzugt wird als Kältemittel flüssiger Stickstoff in den Gefrierkasten eingeleitet und gasförmiger Stickstoff aus dem Gefrierkasten abgezogen. Dabei ist es von Vorteil, das Einleiten des flüssigen Stickstoffs in Abhängigkeit von der Temperatur des abgezogenen gasförmigen Stickstoffs oder der Frostausbreitungsgeschwindigkeit im Boden zu regeln um eine gleichmäßige Gefriertemperatur sicherzustellen.

Der Gefrierkasten wird in der Paxis einfach mittels einer Hebevorrichtung, z.B. eines Krans, über den kontaminierten Boden gehievt und auf den Boden abgesenkt.

Zweckmäßigerweise werden mehrere Gefrierkästen derart nebeneinander auf den Boden aufgesetzt, daß der verunreinigte Boden weitgehend mit Gefrierkästen überdeckt ist. Dabei werden gegebenenfalls Gefrierkästen unterschiedlicher Größe und/oder Geometrie verwendet und diese sowohl auf horizontales Gelände als auch auf eventuell vorhandene geneigte Geländeabschnitte aufgesetzt, um eine gute Anpassung an die Topographie des kontaminierten Bodenbereichs zu erreichen. Die Gefrierkästen können entweder in Serie mit dem Kältemittel versorgt werden, oder es wird jeder Gefrierkasten einzeln mit Kältemitteln beschickt.

Ist der kontaminierte Boden bis auf eine Tiefe von z.B. 3 m gefroren, wird der gefrorene Boden z.B. mit Hilfe eines Baggers bis auf eine Tiefe von 2,50 m ausgehoben. Dadurch wird der Austritt von Dämpfen vermieden. Zum Sichern der beim Ausheben des Bodens freigelegten Seitenwände des Bodens werden Gefrierkästen an die Seitenwände aufgesetzt und durch Einleiten eines Kältemittels, bevorzugt flüssigen Stickstoffs, in die Gefrierkästen gefrostet.

In einer besonders bevorzugten Ausführungsform der Erfindung werden das Gefrieren und Ausheben des verunreinigten Bodens taktweise durchgeführt. Hierzu wird der Gefrierkasten auf einen ersten Bodenbereich aufgesetzt und der darunter liegende Boden vereist. Anschließend wird der Gefrierkasten seitlich versetzt, sodaß ein angrenzender Bodenbereich gefroren werden kann. Während dieser Bodenbereich vereist wird, wird der erste Bodenbereich ausgehoben. Daraufhin wird der Gefrierkasten weiter versetzt, sodaß wieder ein neuer Bodenbereich gefroren werden kann, während der vorher gefrostete Boden ausgehoben wird, usw. Auf diese Weise können auch größere Gebiete abschnittsweise saniert werden.

Eine Vorrichtung zur Durchführung des Verfahrens weist eine Gefriereinrichtung zum Gefrieren des Bodens und eine Aushubeinrichtung zum Ausheben des Bodens auf. Erfindungsgemäß besteht die Gefriereinrichtung aus mindestens einem Gefrierkasten mit flächenhafter Ausdehnung, der eine Zufuhrleitung für kaltes Kältemittel und eine Abfuhrleitung für erwärmtes Kältemittel aufweist.

Der Gefrierkasten ist in einer zweckmäßigen Ausführungsform quaderförmig ausgebildet und weist eine Breite von ca. 0,5 bis ca. 3 m, eine Länge von ca. 1 bis ca. 5 m und eine Höhe von ca. 0,05 bis ca. 0,5 m auf. Zur Anpassung an spezielle Geländeverhältnisse sind aber auch andere Geometrien denkbar, die dann jeweils in geeigneter Weise gewählt werden.

Außerdem weist der Gefrierkasten zweckmäßigerweise eine Aufhängeeinrichtung auf, die mit einer Hebeeinrichtung verbindbar ist. Auf diese Weise kann der Gefrierkasten z.B. mit Hilfe eines Krans auf den Boden aufgesetzt werden.

In einer besonders bevorzugten Ausführungsform ist die Deckfläche des Gefrierkastens mit einer Isolierung versehen, um den Wärmeeinfall von der Atmosphäre zu minimieren. Als Isolierung wird zweckmäßigerweise eine Schaumstoffschicht auf die Deckfläche aufgebracht. Eine andere Ausführungsform sieht eine evakuierte Kammer vor, die über der Deckfläche des Gefrierkastens angeordnet ist.

Insbesondere für den Einsatz an geneigten Gelände-Abschnitten ist ein Einbau von Leitblechen im Innern des Gefrierkastens vorgesehen. Diese Leitbleche sind bevorzugterweise so angeordnet, daß sie einen schlaufenförmigen Strömungsweg für das Kältemittel im Gefrierkasten bilden. Auf diese Weise wird eine gleichmäßige Kühlung des gesamten vom Gefrierkasten überdeckten Bodens erreicht.

Der Gefrierkasten weist bevorzugterweise einen Kontaktboden aus einem Material mit hoher Wärmeleitfähigkeit, z.B. Aluminium, auf, sodaß der darunter liegende kontaminierte Bodenbereich ohne wesentliche Kälteverluste gefrostet werden kann. In einer anderen Ausführungsform ist der Gefrierkasten unten offen ausgebildet, sodaß das Kältemittel mit dem kontaminierten Boden direkt in Kontakt tritt. Bei dieser Ausführungform muß jedoch auf eine relativ gute Abdichtung zwischen Gefrierkasten und Boden geachtet werden.

Zweckmäßigerweise ist der Gefrierkasten aus Aluminiumblech gefertigt, so daß sich eine leichte Gefriereinheit mit hoher Wärmeleitfähigkeit ergibt, die gut handhabbar ist. Eine andere Variante sieht eine Ausbildung des Gefrierkastens aus flexiblem, elastischen Material vor. Auf diese Weise kann sich der Gefrierkasten an unterschiedliche Geländeverhältnisse anpassen. Es ist auch ein "Gefrierkasten" aus Metallfolie denkbar.

Die Erfindung ermöglicht sicheres Arbeiten bei der Sanierung kontaminierter Böden, da nur wenige Anschlüsse für das Kältemittel, insbesondere den flüssigen Stickstoff, nötig sind. Außerdem erfolgt der Aushub des Bodens immer im kältesten Bereich. Die mit Bodenbohrungen verbundenen Nachteile treten bei der Erfindung prinzipiell nicht auf. Durch eine große Wärmeaustauschfläche zwischen kontaminiertem Boden und dem Gefrierkasten wird eine sehr hohe Frostausbreitungsgeschwindigkeit erzielt. Darüberhinaus ist eine schnelle und einfache Montage der Vorrichtung auf dem zu sanierenden Gelände möglich.

Im folgenden soll die Erfindung anhand eines in den Zeichnungen schematisch dargestellten Ausführungsbeispiels näher erläutert werden.

Es zeigen:
- Figur 1: eine Prinzipskizze zur Sanierung einer Mülldeponie
- Figur 2: eine Detailskizze zur Frostung eines Bodenabschnitts
- Figur 3: einen Gefrierkasten in der Draufsicht
- Figur 4: einen Gefrierkasten im Schnitt

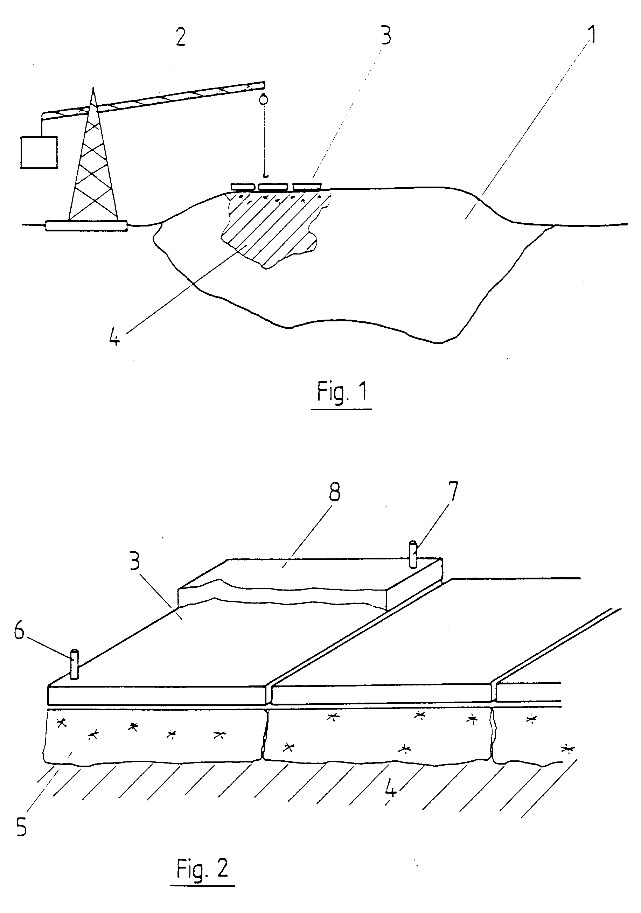

In Figur 1 ist das Prinzip der Sanierung einer Mülldeponie 1 dargestellt. Mit Hilfe eines Krans 2 werden die Gefrierkästen 3 auf die Oberfläche eines stark kontaminierten Bodenabschnitts 4 aufgesetzt.

In die Gefrierkästen 3 wird flüssiger Stickstoff eingeleitet, sodaß der darunterliegende Boden vereist wird. Hat sich ein ausreichender Frostkörper 5 ausgebildet, so werden die Gefrierkästen 3 seitlich versetzt, sodaß der gefrorene Boden 5 mit Hilfe eines Baggers ausgehoben werden kann. Das ausgehobene kontaminierte Bodenmaterial wird im gefrorenen Zustand in Behälter eingebracht und fest verschlossen, bevor es gegebenenfalls einer Weiterbehandlung zugeführt wird. Die beim Ausheben des gefrorenen Bodenmaterials entstehenden Seitenwände im Boden 4 werden dadurch gesichert, daß Gefrierkästen 3 auf die Seitenwände aufgelegt werden und die Seitenwände vereist werden. Die so gesicherte Grube kann z.B. mit unbelastetem Bodenmaterial wieder aufgefüllt werden.

Figur 2 zeigt die in Figur 1 angedeuteten Gefrierkästen 3 mit dem darunterliegenden Frostkörper 5 im Detail. Die Gefrierkästen 3 weisen eine Zufuhrleitung 6 für flüssigen Stickstoff und eine Abgasleitung 7 für gasförmigen Stickstoff auf. Außerdem sind die Gefrierkästen 3 mit einer Schaumstoffschicht 8 zur Wärmeisolierung überdeckt. Die Gefrierkästen 3 weisen eine Höhe von ca. 0,05 m, eine Breite von ca. 0,5 m und eine Länge von ca. 1 m auf. Beim Betrieb der Gefrierkästen 3 wird die Zufuhr des flüssigen Stickstoffs in Abhängigkeit von der Temperatur des über die Abgasleitung 7 entweichenden gasförmigen Stickstoffs geregelt. In dem unter den Gefrierkästen 3 liegenden Boden 4 bildet sich ein Frostkörper 5 aus, der an seiner Oberfläche eine Temperatur von ca. -190°C und in einer Tiefe von ca. 3 m eine Temperatur von ca. 0°C aufweist.

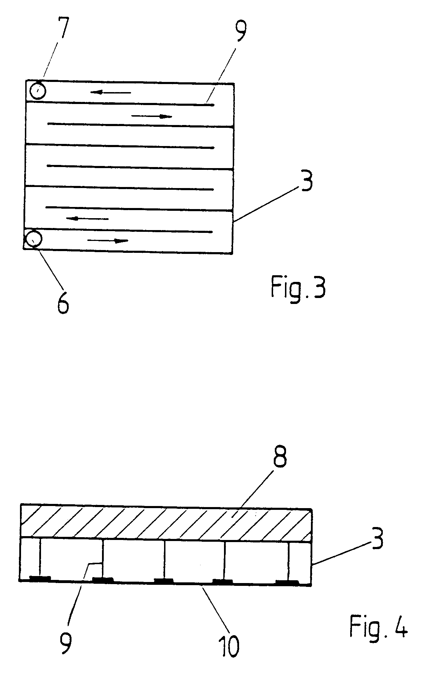

In Figur 3 ist eine Draufsicht eines Gefrierkastens 3 mit eingebauten Leitblechen 9 dargestellt. Dabei ist die Deckfläche des Gefrierkastens 3 abgenommen, um die Anordnung der Leitbleche 9 zeigen zu können. Die Leitbleche 9 sind so im Innern des Gefrierkastens 3 angebracht, daß sie einen schlaufenförmigen Strömungsweg des Stickstoffs von der Zufuhrleitung 6 bis zur Abgasleitung 7 bilden.

Figur 4 zeigt einen Querschnitt durch einen Gefrierkasten 3 mit Leitblechen 9, die aus einem T-Profil aus Aluminium bestehen. Der Gefrierkasten 3 ist von einer Schaumstoffschicht 8 zur Wärmeisolierung überdeckt. Außerdem weist der Gefrierkasten 3 einen Kontaktboden 10 aus Aluminiumblech auf, der eine gute Wärmeleitung zwischen dem zu gefrierenden Boden und dem in Gefrierkasten 3 befindlichen flüssigen Stickstoff ermöglicht.

## Patentansprüche

1. Verfahren zur Sanierung von mit Schadstoffen verunreinigtem Boden durch Gefrieren und anschließendes Ausheben des verunreinigten Bodens, dadurch gekennzeichnet, daß zum Gefrieren des Bodens (4) mindestens ein flächenhaft ausgebildeter Gefrierkasten (3) auf den auszuhebenden Boden (4) aufgesetzt wird und in den Gefrierkasten (3) ein Kältemittel eingeleitet wird.

2. Verfahren nach Anspruch 1, dadurch gekennzeichnet, daß als Kältemittel flüssiger Stickstoff in den Gefrierkasten (3) eingeleitet und gasförmiger Stickstoff aus dem Gefrierkasten (3) abgezogen wird.

3. Verfahren nach Anspruch 2, dadurch gekennzeichnet, daß das Einleiten des flüssigen Stickstoffs in Abhängigkeit von der Temperatur des abgezogenen gasförmigen Stickstoffs geregelt wird.

4. Verfahren nach einem der Ansprüche 1 bis 3, dadurch gekennzeichnet, daß mehrere Gefrierkästen (3), gegebenenfalls in verschiedenen Größen, derart nebeneinander auf den Boden (4) aufgesetzt werden, daß der verunreinigte Boden (4) weitgehend mit Gefrierkästen (3) überdeckt ist.

5. Verfahren nach einem der Ansprüche 1 bis 4, dadurch gekennzeichnet, daß beim Ausheben des verunreinigten Bodens (4) freigelegte Seitenwände des Bodens (4) durch Aufsetzen von Gefrierkästen (3) an die Seitenwände und Einleiten eines Kältemittels in diese Gefrierkästen (3) gefrostet werden.

6. Verfahren nach einem der Ansprüche 1 bis 5, dadurch gekennzeichnet, daß der Boden (4) bis zu einer Tiefe von.ca. 3 m gefroren wird.

7. Verfahren nach einem der Ansprüche 1 bis 6, dadurch gekennzeichnet, daß der Gefrierkasten (3) mittels eines Hebezeuges (2) auf den Boden (4) aufgesetzt wird.

8. Verfahren nach einem der Ansprüche 1 bis 7, dadurch gekennzeichnet, daß das Gefrieren und das Ausheben verunreinigter Bodenbereiche taktweise in der Art durchgeführt werden, daß jeweils ein erster Bodenbereich gefroren wird, dann der Gefrierkasten (3) seitlich versetzt wird und der angrenzende Bodenbereich gefroren wird, während der erste Bodenbereich ausgehoben wird.

9. Vorrichtung zur Durchführung des Verfahrens nach einem der Ansprüche 1 bis 8 mit einer Gefriereinrichtung zum Gefrieren des Bodens und einer Aushubeinrichtung zum Ausheben des Bodens, dadurch gekennzeichnet, daß die Gefriereinrichtung aus mindestens einem Gefrierkasten (3) mit flächenhafter Ausdehnung besteht, der eine Zufuhrleitung (6) für kaltes Kältemittel und eine Abfuhrleitung (7) für erwärmtes Kältemittel aufweist.

10. Vorrichtung nach Anspruch 9, dadurch gekennzeichnet, daß der Gefrierkasten (3) quaderförmig ausgebildet ist und eine Breite von ca. 0,5 bis ca. 3 m, eine Länge von ca. 1 bis ca. 5 m und eine Höhe von ca. 0,05 bis ca. 0,5 m aufweist.

11. Vorrichtung nach Anspruch 9 oder 10, dadurch gekennzeichnet, daß der Gefrierkasten (3) eine Aufhängeeinrichtung aufweist, die mit einer Hebeeinrichtung verbindbar ist.

12. Vorrichtung nach einem der Ansprüche 9 bis 11, dadurch gekennzeichnet, daß die Deckfläche des Gefrierkastens (3) mit einer Isolierung (8) versehen ist.

13. Vorrichtung nach Anspruch 12, dadurch gekennzeichnet, daß als Isolierung (8) eine Schaumstoffschicht aufgebracht ist.

14. Vorrichtung nach Anspruch 12, dadurch gekennzeichnet, daß über der Deckfläche des Gefrierkastens eine Vakuumkammer als Isolierung (8) angeordnet ist.

15. Vorrichtung nach einem der Ansprüche 9 bis 14, dadurch gekennzeichnet, daß im Innern des Gefrierkastens (3) Leitbleche (9) derart angeordnet sind, daß sie einen schlaufenförmigen Strömungsweg für das Kältemittel bilden.

16. Vorrichtung nach einem der Ansprüche 9 bis 15, dadurch gekennzeichnet, daß der Gefrierkasten (3) einen Kontaktboden (10) aus einem Material mit hoher Wärmeleitfähigkeit aufweist.

17. Vorrichtung nach einem der Ansprüche 9 bis 15, dadurch gekennzeichnet, daß der Gefrierkasten (3) unten offen ausgebildet ist.

18. Vorrichtung nach einem der Ansprüche 9 bis 17, dadurch gekennzeichnet, daß der Gefrierkasten (3) aus Aluminiumblech gefertigt ist.

19. Vorrichtung nach einem der Ansprüche 9 bis 17, dadurch gekennzeichnet, daß der Gefrierkasten (3) aus flexiblem, elastischem Material gefertigt ist.

## Claims

1. A method of sanitizing soil contaminated with pollutants by freezing and then removing the contaminated soil, characterised in that in order to freeze the soil (4) at least one freezing box (3) of planar construction is positioned onto the soil (4) which is to be removed and a refrigerant is introduced into the freezing box (3).

2. A method as claimed in Claim 1, characterised in that liquid nitrogen is introduced into the freezing box (3) by way of refrigerant and gaseous nitrogen is discharged from the freezing box (3).

3. A method as claimed in Claim 2, characterised in that the introduction of the liquid nitrogen is regulated in dependence upon the temperature of the discharged gaseous nitrogen.

4. A method as claimed in one of Claims 1 to 3, characterised in that a plurality of freezing boxes (3), optionally of different sizes, are positioned one beside another on the soil (4) in such manner that the contaminated soil (4) is substantially covered by freezing boxes (3).

5. A method as claimed in one of Claims 1 to 4, characterised in that side walls of the soil (4), exposed by the removal of the contaminated soil (4), are frosted by the positioning of freezing boxes (3) against the side walls and the introduction of a refrigerant into said freezing boxes (3).

6. A method as claimed in one of Claims 1 to 5, characterised in that the soil (4) is frozen to a depth of approximately 3 m.

7. A method as claimed in one of Claims 1 to 6, characterised in that the freezing box (3) is positioned on the soil (4) by means of a lifting apparatus (2).

8. A method as claimed in one of Claims 1 to 7, characterised in that the freezing and the removal of contaminated areas of soil are carried out cyclically in such manner that in each case a first area of soil is frozen, whereupon the freezing box (3) is displaced laterally and the adjacent area of soil is frozen while the first area of soil is removed.

9. A device for the implementation of the method claimed in one of Claims 1 to 8 comprising a freezing device for freezing the soil and an excavating device for removing the soil, characterised in the freezing device consists of at least one freezing box (3) of planar construction which comprises a supply line (6) for cold refrigerant and a discharge line (7) for heated refrigerant.

10. A device as claimed in Claim 9, characterised in that the freezing box (3) is of cuboid formation and possesses a width of approximately 0.5 to approximately 3 m, a length of approximately 1 to approximately 5 m and a height of approximately 0.05 to approximately 0.5 m.

11. A device as claimed in Claim 9 or 10, characterised in that the freezing box (3) comprises a suspension device which can be connected to a lifting device.

12. A device as claimed in one of Claims 9 to 11, characterised in that the top surface of the freezing box (3) is provided with insulation means (8).

13. A device as claimed in Claim 12, characterised in that a layer of foam material is applied as insulation means (8).

14. A device as claimed in Claim 12, characterised in that a vacuum chamber is arranged as insulation means (8) over the top surface of the freezing box.

15. A device as claimed in one of Claims 9 to 14, characterised in that baffles (9) are arranged inside the freezing box (3) in such manner that they form a loop-like flow path for the refrigerant.

16. A device as claimed in one of Claims 9 to 15, characterised in that the freezing box (3) possesses a contact base (10) made of a material having a high thermal conductivity.

17. A device as claimed in one of Claims 9 to 15, characterised in that the freezing box (3) is constructed so as to be open at the bottom.

18. A device as claimed in one of Claims 9 to 17, characterised in that the freezing box (3) is produced from aluminium plate.

19. A device as claimed in one of Claims 9 to 17, characterised in that the freezing box (3) is produced from flexible, elastic material.

## Revendications

1. Procédé pour l'assainissement par congélation d'un sol souillé par des matières polluantes, suivie de l'enlèvement du sol contaminé, caractérisé en ce que, pour la congélation du sol (4) on dépose au moins un boîtier de congélation (3) de forme plate sur le sol (4) à enlever et on introduit dans le boîtier de congélation (3) un agent frigorifique.

2. Procédé selon la revendication 1, caractérisé en ce que, comme agent frigorifique, on introduit de l'azote liquide dans le boîtier de congélation (3) en on en extrait de l'azote sous forme gazeuse.

3. Procédé selon la revendication 2, caractérisé en ce que l'introduction de l'azote liquide est réglée en fonction de la température de l'azote extrait sous forme gazeuse.

4. Procédé selon l'une des revendications 1 à 3, caractérisé en ce que on dépose côte à côte sur le sol (4) plusieurs boîtiers de congélation (3) éventuellement de dimensions différentes pour que le sol contaminé (4) soit recouvert complètement par les boîtiers de congélation (3).

5. Procédé selon l'une des revendications 1 à 4, caractérisé en ce que les parois latérales du sol (4) mises à découvert par creusement du sol contaminé (4) sont gelées par mise en place de boîtiers de congélation (3) sur ces parois latérales et par introduction d'un agent frigorifique dans ces boîtiers de congélation (3).

6. Procédé selon l'une des revendications 1 à 5, caractérisé en ce que le sol (4) est gelé jusqu'à une profondeur d'environ 3 mètres.

7. Procédé selon l'une des revendications 1 à 6, caractérisé en ce que le boîtier de congélation (3) est déposé sur le sol au moyen d'un engin de levage (2).

8. Procédé selon l'une des revendications 1 à 7, caractérisé en ce que la congélation et l'enlèvement des zones de sol contaminées sont effectués selon un certain rythme en ce sens que chaque fois qu'une première zone de sol a été gelée, le boîtier de congélation (3) est alors déplacé latéralement puis la zone de sol adjacente est gelée tandis que la première zone de sol est extraite.

9. Dispositif pour la mise en oeuvre du procédé selon l'une des revendications 1 à 8, avec un dispositif de congélation pour la congélation du sol et un dispositif d'excavateur pour l'enlèvement du sol, caractérisé en ce que le dispositif de congélation consiste en au moins un boîtier de congélation (3) avec une configuration plane qui comporte une canalisation d'amenée (6) pour un agent frigorifique froid et une canalisation d'évacuation (7) pour cet agent frigorifique réchauffé.

10. Dispositif selon la revendication 9, caractérisé en ce que le boîtier de congélation (3) a une forme quadrangulaire et présente une largeur d'environ 0,5 à environ 3 mètres, une longueur d'environ 1 à environ 5 mètres et une hauteur d'environ 0,05 à environ 0,5 mètres.

11. Dispositif selon la revendication 9 ou 10, caractérisé en ce que le boîtier de congélation (3) présente un dispositif de suspension qui est associable à un dispositif de levage.

12. Dispositif selon l'une des revendications 9 à 11, caractérisé en ce que la surface de couverture du boîtier de congélation (3) est munie d'une isolation (8).

13. Dispositif selon la revendication 12, caractérisé en ce que, comme isolation (8), on dépose une couche de matériau cellulaire.

14. Dispositif selon la revendication 12, caractérisé en ce que, comme isolation (8), on dispose sur la surface de couverture du boîtier de congélation une chambre mise sous vide.

15. Dispositif selon l'une des revendications 9 à 14, caractérisé en ce que, à l'intérieur du boîtier de congélation (3), on dispose des tôles en chicane (9) qui forment, pour l'agent frigorifique, un parcours d'écoulement en spirale.

16. Dispositif selon l'une des revendications 9 à 15, caractérisé en ce que le boîtier de congélation (3) présente un fond de contact (10) en un matériau à haute conductibilité thermique.

17. Dispositif selon l'une des revendications 9 à 15, caractérisé en ce que le boîtier de congélation (3) est ouvert vers le bas.

18. Dispositif selon l'une des revendications 9 à 17, caractérisé en ce que le boîtier de congélation (3) est réalisé en tôles d'aluminium.

19. Dispositif selon l'une des revendications 9 à 17, caractérisé en ce que le boîtier de congélation (3) est réalisé en un matériau souple élastique.
